(19) **Europäisches Patentamt / European Patent Office / Office européen des brevets**

(11) **EP 2 780 179 B1**

(12) **FASCICULE DE BREVET EUROPEEN**

(45) Date de publication et mention de la délivrance du brevet:
**21.02.2018 Bulletin 2018/08**

(21) Numéro de dépôt: **12783625.2**

(22) Date de dépôt: **13.11.2012**

(51) Int Cl.:
***B60C 11/14*** *(2006.01)* ***B60C 11/16*** *(2006.01)*
***B60C 1/00*** *(2006.01)*

(86) Numéro de dépôt international:
**PCT/EP2012/072479**

(87) Numéro de publication internationale:
**WO 2013/072303 (23.05.2013 Gazette 2013/21)**

(54) **PNEUMATIQUE CLOUTE**

SPIKEREIFEN

SPIKE TIRE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.11.2011 FR 1160364**

(43) Date de publication de la demande:
**24.09.2014 Bulletin 2014/39**

(73) Titulaire: **Compagnie Générale des Etablissements Michelin
63000 Clermont-Ferrand (FR)**

(72) Inventeurs:
• **FABING, Daniel
63040 Clermont-Ferrand Cedex 9 (FR)**
• **BATNINI, Illyès
63040 Clermont-Ferrand Cedex 9 (FR)**
• **LESAGE, Pierre
63040 Clermont-Ferrand Cedex 9 (FR)**
• **LOPEZ, Béatrice
63040 Clermont-Ferrand Cedex 9 (FR)**

(74) Mandataire: **Millanvois, Patrick Jacques Jean
Manufacture Française
des Pneumatiques Michelin
23, place des Carmes - Déchaux
DGD/PI - F35 - Ladoux
63040 Clermont-Ferrand Cedex 9 (FR)**

(56) Documents cités:
EP-A1- 1 055 509      DE-A1-102010 015 939
JP-A- 58 051 134

**Description**

DOMAINE DE L'INVENTION

La présente invention concerne des pneumatiques pour roulage sur glace comportant des clous (« pneumatiques cloutés »).

ARRIERE-PLAN

Les pneumatiques cloutés possèdent des avantages indéniables en terme de comportement dans les conditions de roulage hivernales, comme par exemple le roulage sur revêtement glacé. Le contact avec la glace, et plus particulièrement la pénétration du clou dans la glace permet de compenser la diminution d'adhérence constatée au niveau des éléments de sculpture de la bande de roulement du pneumatique : les clous grattent la glace et permettent de générer des efforts additionnels sur la glace.

Une des difficultés dans l'utilisation de pneumatiques cloutés consiste dans le fait que ces pneumatiques, lorsqu'ils sont utilisés sur une route non glacée, dégradent l'état de surface de la route et conduisent à l'usure prématurée de la chaussée. C'est pour cette raison qu'un certain nombre de pays ont interdit les pneumatiques cloutés ou en ont limité l'utilisation à certains types de véhicules et/ou à des périodes limitées.

Il a été proposé (voir le brevet japonais JP 63-297109) de réduire ce problème en associant les clous à des éléments d'appui en composition caoutchouteuse qui sont déformés lorsqu'on exerce un effort radial sur le clou. La composition caoutchouteuse dans laquelle ces éléments d'appui sont réalisés est choisie de manière à ce que leur résistance à la déformation augmente lorsque leur température baisse. Si le pneumatique roule sur de la glace, la température de l'élément d'appui est basse, et sa résistance à la déformation élevée ; par conséquent, l'élément d'appui résiste à l'effort transmis par le clou et celui-ci fait saillie de la bande de roulement, de manière à gratter la glace. En revanche, lorsque le pneumatique roule sur une chaussée non glacée, la température de l'élément d'appui est plus élevée et elle résiste moins à la déformation ; par conséquent, le clou peut disparaître dans la bande de roulement chaque fois qu'il entre en contact avec la chaussée.

Si cette approche a permis de réduire l'effet négatif du pneumatique clouté sur la chaussée, la demanderesse a constaté que la solution proposée reste insuffisante car le point de fonctionnement du pneumatique clouté n'est pas optimisé.

Il a également été proposé (document JP 58 051 134, représentant l'état de la technique le plus proche montre les caractéristiques techniques du préambule de revendication 1) de prévulcaniser les clous dans un cube de composition caoutchouteuse et de coller ou vulcaniser le composite obtenu dans la bande de roulement. Les documents EP 1 055 509 et DE 10 2010 015939 montrent pour améliorer l'adhérence entre le clou et la bande de roulement respectivement le pré positionnement du clou dans le moule avant cuisson et l'utilisation d'une colle entre la bande de roulement et le clou.

RESUME DE L'INVENTION

Un des objectifs de la présente invention est de prévoir un pneumatique clouté possédant une excellente adhérence sur glace tout en ayant un impact sur asphalte réduit.

Cet objectif est atteint par un pneumatique destiné à rouler sur un sol pouvant être couvert de glace, comportant :

une bande de roulement comportant une première partie en contact avec le sol et au moins une deuxième partie disposée radialement à l'intérieur de la première partie, la première partie de la bande de roulement étant formée dans une première composition caoutchouteuse et la deuxième partie de la bande de roulement étant formée dans une deuxième composition caoutchouteuse différente de la première composition caoutchouteuse ;
au moins un clou, comportant :

une tête, destinée à ancrer le clou dans la bande de roulement, la tête ayant une dimension maximale DT ;
une mise, destinée à entrer en contact avec la glace ;
un corps reliant la tête et la mise, le corps ayant un axe de symétrie, l'ensemble formé par la tête et le corps du clou ayant une hauteur radiale HA ;
un axe longitudinal passant par l'axe de symétrie du corps ;

dans lequel ledit au moins un clou est disposé dans la bande de roulement de sorte que :

son axe longitudinal est sensiblement parallèle à une direction radiale ;

la mise du clou fait saillie de la bande de roulement lorsque le clou n'est pas en contact avec le sol ;

le corps du clou est au moins partiellement en contact avec la première partie de la bande de roulement ; et

la tête du clou est entièrement ancrée dans la deuxième partie de la bande de roulement ;

dans lequel ladite au moins une deuxième partie de la bande de roulement enveloppe la tête dudit au moins un clou et s'étend :

radialement à l'intérieur de la tête du clou, jusqu'à une distance DI du point radialement le plus à l'intérieur du clou, la distance DI étant supérieure ou égale à 40% de la dimension maximale DT de la tête du clou (DI $\geq$ 0.4·DT/2) ;

radialement à l'extérieur de la tête du clou, jusqu'à une distance DE du point radialement le plus à l'intérieur du clou, la distance DE étant supérieure ou égale à 40% (et, de préférence, supérieure ou égale à 60%) de ladite hauteur radiale HA ;

dans toutes les directions perpendiculaires à l'axe longitudinal du clou, jusqu'à une distance DP de l'axe longitudinal du clou, la distance DP étant supérieure ou égale à la dimension maximale DT de la tête du clou ;

dans lequel le module complexe G*(0°C) de la première composition caoutchouteuse est inférieur à 1.5 MPa ;
et dans lequel le module complexe G* de la deuxième composition caoutchouteuse évolue en fonction de la température tel que G*(5°C) est supérieur ou égal à 5 MPa et G*(20°C) est inférieur ou égal à 0.5· G*(5°C).

Des essais effectués par la demanderesse ont permis de mettre en évidence que cette configuration permet d'améliorer de façon très significative le compromis adhérence sur glace / nuisance du clou (en termes d'usure des routes et du bruit intérieur dans le véhicule).

Une pellicule formée de la première composition caoutchouteuse peut être disposée entre ledit au moins un clou et ladite au moins une deuxième partie de la bande de roulement, l'épaisseur de la pellicule, mesurée perpendiculairement à la surface du clou, étant inférieure ou égale à 1 mm.

Selon un mode de réalisation particulier le pneumatique comporte une pluralité de clous et dans lequel la bande de roulement comporte une pluralité de deuxièmes parties formées dans la deuxième composition caoutchouteuse, et dans lequel la tête de chaque clou est entièrement ancrée dans une deuxième partie distincte de la bande de roulement. Ce mode de réalisation permet de réduire la quantité de la deuxième composition caoutchouteuse, ce qui peut être avantageux si cette composition caoutchouteuse est onéreuse ou si d'autres considérations rendent souhaitable de prévoir d'autres compositions caoutchouteuses dans la profondeur de la bande de roulement. Il permet également de conserver une bonne adhérence du pneumatique lorsque l'usure de la bande de roulement est avancée.

Selon un mode de réalisation alternatif, le pneumatique comporte une pluralité de clous et dans lequel la bande de roulement comporte une seule deuxième partie formée dans la deuxième composition caoutchouteuse, et dans lequel les têtes de tous les clous sont ancrées dans cette deuxième partie. Ce mode de réalisation est avantageux dans la mesure où il réduit la complexité du procédé de fabrication.

Selon une première option préférable, la hauteur radiale HA est supérieure ou égale à 9 mm et inférieure ou égale à 10 mm. Ainsi on obtient un bon ancrage du clou dans la bande de roulement et une longévité en usure convenable.

Selon une deuxième option préférable, la dimension maximale DT de la tête du clou est supérieure ou égale à 8 mm et inférieure ou égale à 10 mm. Ces dimensions permettent d'obtenir un bon compromis entre la facilité d'implantation du clou et sa rétention dans la bande de roulement.

Selon une troisième option préférable, la distance DI est supérieure ou égale à 4 mm et inférieure ou égale à 4.5 mm. Une telle distance permet de réduire le risque d'une oxydation de l'armature de sommet tout en gardant une épaisseur de la bande de roulement raisonnable.

Selon une quatrième option préférable, la distance DP est supérieure ou égale à 1.5·DT et inférieure ou égale à 2.5·DT (1.5·DT $\leq$ DP $\leq$ 2.5·DT). De manière plus particulièrement préférable, DP = 2·DT. Ainsi l'effet de la deuxième composition caoutchouteuse est optimisé.

Selon une cinquième option préférable, ledit au moins un clou est réalisé dans un matériau ayant un coefficient de conduction thermique supérieur ou égal à 150 W/(m·K). L'aluminium, l'or, le cuivre, l'argent ou encore le diamant sont de tels matériaux.

De préférence, la deuxième composition caoutchouteuse comporte un premier élastomère SBR (styrène-butadiène) ayant une température de transition vitreuse (Tg) supérieure ou égale à -25°C et inférieur ou égale à +20°C (« à très haute Tg »), à un taux supérieur ou égal à 30 pce et inférieur ou égal à 60 pce, ainsi qu'au moins un autre élastomère diénique, à un taux supérieur ou égal à 40 pce et inférieur ou égal à 70 pce.

Plus préférentiellement, ledit premier élastomère SBR a une température de transition vitreuse (Tg) supérieure ou égale à -20°C et inférieur ou égale à +10°C, et plus préférentiellement encore, il a une température de transition vitreuse (Tg) supérieure ou égale à -15°C et inférieur ou égale à 0°C.

Préférentiellement, ledit autre élastomère diénique est choisi dans le groupe constitué par les polybutadiènes, le caoutchouc naturel, les polyisoprènes de synthèse et les mélanges de ces élastomères.

Selon un mode de réalisation préférentiel, la deuxième composition caoutchouteuse comporte un coupage d'élastomères comportant ledit élastomère SBR à très haute Tg à un taux supérieur ou égal à 30 pce et inférieur ou égal à 60 pce, un BR (polybutadiène) à un taux supérieur ou égal à 5 pce et inférieur ou égal à 50 pce, ainsi que du caoutchouc naturel à un taux supérieur ou égal à 10 pce et inférieur ou égal à 60 pce, le taux total étant égal à 100 pce.

Selon un mode de réalisation préférentiel, la deuxième composition caoutchouteuse comporte au moins une charge silice et au moins un noir de carbone, le taux de ladite au moins une charge silice étant supérieur ou égal à 70 pce et inférieur ou égal à 100 pce et le taux dudit au moins un noir de carbone étant supérieur ou égal à 1 pce et inférieur ou égal à 10 pce.

Selon un autre mode de réalisation préférentiel, la deuxième composition caoutchouteuse comporte au moins une charge silice et au moins un noir de carbone, le taux de ladite au moins une charge silice étant supérieur ou égal à 10 pce et inférieur ou égal à 30 pce et le taux dudit au moins un noir de carbone étant supérieur ou égal à 60 pce et inférieur ou égal à 80 pce.

BREVE DESCRIPTION DES DESSINS

La figure 1 représente un pneumatique clouté selon l'art antérieur.

La figure 2 représente un clou selon l'art antérieur.

La figure 3 représente une alvéole selon l'art antérieur.

La figure 4 représente un clou inséré dans une alvéole, selon l'art antérieur.

La figure 5 représente schématiquement un clou à mise excentrée.

Les figures 6 à 8 représentent chacune une portion d'un pneumatique selon l'invention.

DESCRIPTION DETAILLEE DE L'INVENTION

Dans l'emploi du terme « radial » il convient de distinguer plusieurs utilisations différentes du mot par la personne du métier. Premièrement, l'expression se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un fil ou une armature est dit « radial(e) » lorsque le fil ou les éléments de renforcement de l'armature font avec la direction circonférentielle un angle supérieur ou égal à 80° et inférieur ou égal à 90°. Précisions que dans le présent document, le terme « fil » doit être entendu dans un sens tout à fait général et comprend les fils se présentant sous la forme de monofilaments, de multifilaments, d'un câble, d'un retors ou d'un assemblage équivalent, et ceci, quelle que soit la matière constituant le fil ou le traitement de surface pour favoriser sa liaison avec le caoutchouc.

Enfin, par « coupe radiale » ou « section radiale » on entend ici une coupe ou une section selon un plan qui contient l'axe de rotation du pneumatique.

Une direction « axiale » est une direction parallèle à l'axe de rotation du pneumatique. Un point P5 est dit « axialement intérieur » à un point P6 (ou « axialement à l'intérieur » du point P6) s'il est plus près du plan médian du pneumatique que le point P6. Inversement, un point P7 est dit « axialement extérieur à » un point P8 (ou « axialement à l'extérieur » du point P8) s'il est plus éloigné du plan médian du pneumatique que le point P8. Le « plan médian » du pneumatique est le plan qui est perpendiculaire à l'axe de rotation du pneumatique et qui se situe à équidistance des structures annulaires de renforcement de chaque bourrelet. Lorsqu'il est dit que le plan médian sépare, dans toute section radiale, le pneumatique en deux « moitiés » de pneumatique, cela ne veut pas dire que le plan médian constitue nécessairement un plan de symétrie du pneumatique. L'expression « moitié de pneumatique » a ici une signification plus large et désigne une portion du pneumatique ayant une largeur axiale proche de la moitié de la largeur axiale du pneumatique.

Une direction « circonférentielle » est une direction qui est perpendiculaire à la fois à un rayon du pneumatique et à la direction axiale.

La « surface de roulement » d'une bande de roulement désigne ici l'ensemble des points de la bande de roulement qui entrent en contact avec un sol lorsque le pneumatique - gonflé à sa pression de service et sans clous - roule sur un sol.

Dans le cadre de ce document, l'expression « composition caoutchouteuse » désigne une composition de caoutchouc comportant au moins un élastomère et une charge.

Dans le présent document, les termes « module élastique G' » et « module visqueux G" » désignent des propriétés dynamiques bien connues de la personne du métier. Ces propriétés sont mesurées sur un viscoanalyseur de type Metravib VA4000 sur des éprouvettes moulées à partir de compositions crues. Des éprouvettes telles que celles décrites dans la norme ASTM D 5992 - 96 (version publiée en Septembre 2006, initialement approuvée en 1996) à la figure X2.1 (mode de réalisation circulaire) sont utilisées. Le diamètre «d » de l'éprouvette est de 10 mm (elle a donc une section circulaire de 78.5 mm$^2$), l'épaisseur « L » de chacune des portions de composition caoutchouteuse est de 2 mm, ce qui donne un ration « d/L » de 5 (contrairement à la norme ISO 2856, mentionnée dans la norme ASTM, paragraphe X2.4, qui préconise une valeur d/L de 2).

On enregistre la réponse d'un échantillon de composition caoutchouteuse vulcanisée soumis à une sollicitation sinusoïdale en cisaillement simple alterné, à la fréquence de 10 Hz. L'éprouvette est sollicitée en cisaillement sinusoïdal à 10 Hz, à contrainte imposée (0.7 MPa), symétriquement autour de sa position d'équilibre.

Une accommodation de l'éprouvette est réalisée préalablement à la mesure. L'éprouvette est alors sollicitée en cisaillement sinusoïdal à 10Hz, à 100% de déformation crête-crête, à température ambiante.

La mesure est réalisée au cours d'une rampe de température croissante de 1,5°C par minute, depuis une température Tmin inférieure à la température de transition vitreuse (Tg) du matériau, jusqu'à une température Tmax qui peut correspondre au plateau caoutchoutique du matériau. Avant de commencer le balayage, on stabilise l'échantillon à la température Tmin pendant 20 min pour avoir une température homogène au sein de l'échantillon. Le résultat exploité est le module élastique de cisaillement dynamique (G') et le module visqueux de cisaillement (G") aux températures choisies (en l'occurrence, 0°, 5° et 20°C).

Le « module complexe » G* se définit comme la valeur absolue de la somme complexe des modules élastique G' et visqueux G" :

$$G^* = \sqrt{G'^2 + G''^2}.$$

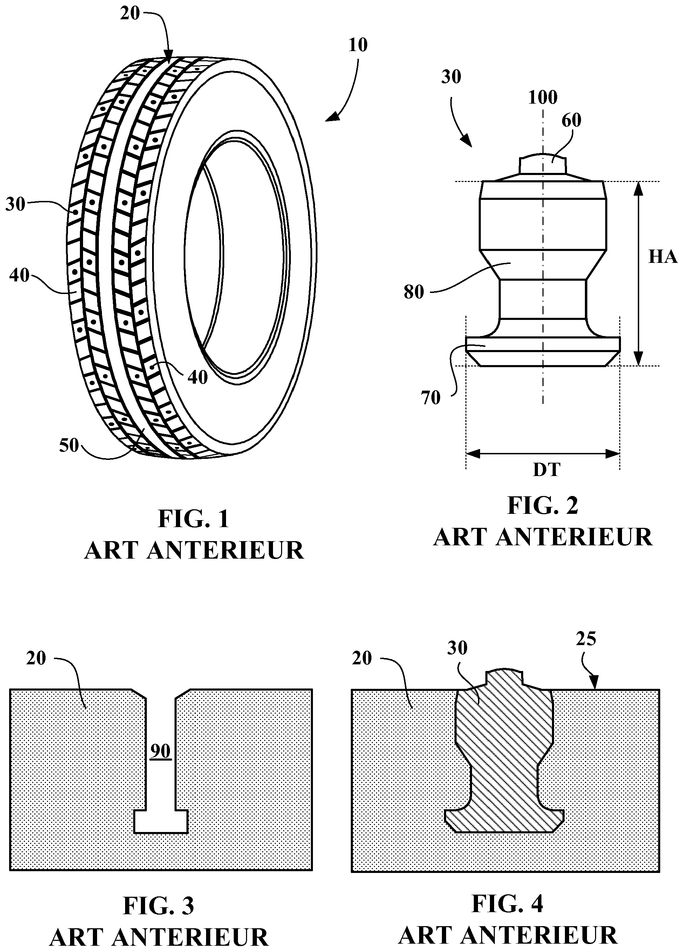

La figure 1 représente schématiquement un pneumatique 10 selon l'art antérieur dont la bande de roulement 20 comporte une pluralité de clous 30. Les clous 30 sont disposés sur toute la largeur de la surface de roulement dans les pains de gomme 40 de la bande de roulement 20. Bien entendu, la nervure centrale 50 de la bande de roulement peut également être pourvue de clous 30. Les clous 30 sont disposés à plusieurs positions autour de la périphérie du pneumatique, de sorte qu'à tout instant des clous soient en contact avec le sol sur lequel roule le pneumatique.

La figure 2 représente schématiquement un clou 30 selon l'art antérieur. Le clou 30 comporte une tête 70, destinée à ancrer le clou 30 dans une bande de roulement, la tête 70 ayant une dimension maximale DT. Il comporte en outre une mise 60, destinée à entrer en contact avec la glace lorsque le clou 30 est monté dans un pneumatique qui roule sur un sol couvert de glace. Très souvent, la mise 60 est réalisée à l'aide d'un matériau distinct de celui du reste du clou 30, ce qui permet d'utiliser un matériau plus dur pour cette partie, sujette à de très fortes sollicitations mécaniques. Un corps 80 relie la tête et la mise. Le corps a un axe de symétrie 100 qui définit également « l'axe longitudinal » du clou 30. L'ensemble formé par la tête 70 et le corps 80 du clou a une hauteur radiale HA qui est ici de 9.5 mm.

La figure 3 représente schématiquement une partie de la bande de roulement 20 du pneumatique 10. Cette bande de roulement 20 est pourvue d'une alvéole 90, chaque alvéole comportant un portion cylindrique ouverte sur l'extérieur de la bande de roulement 20 du pneumatique 10 et est adaptée pour coopérer avec un clou 30.

La figure 4 représente schématiquement la même partie de la bande de roulement 20 (avec sa surface de roulement 25) après insertion du clou 30. Grâce à l'élasticité de la composition caoutchouteuse formant la bande de roulement 20, la bande de roulement 20 enveloppe parfaitement le clou 30 et l'ancre fermement dans le pneumatique.

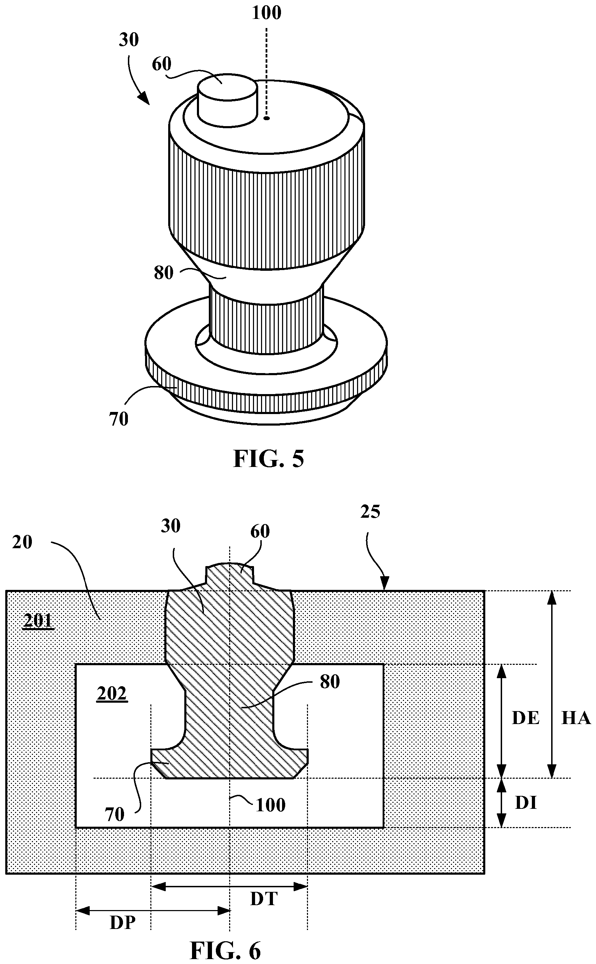

Le clou utilisé n'est pas forcément un clou ayant un axe de symétrie tel que le clou 30 représenté à la figure 2. Il est parfaitement possible d'utiliser un clou 30 ayant une mise 60 excentrée, tel que le clou représenté à la figure 5.

La figure 6 représente une portion d'un pneumatique selon l'invention. On y discerne une portion de bande de roulement 20 comportant une première partie 201 qui est en contact avec le sol (de par la surface de roulement, indiquée à l'aide de la référence 25) et une deuxième partie 202, disposée radialement à l'intérieur de la première partie 201. La première partie 201 de la bande de roulement 20 est formée dans une première composition caoutchouteuse et la deuxième partie de la bande de roulement est formée dans une deuxième composition caoutchouteuse différente de la première composition caoutchouteuse. Les caractéristiques de ces compositions caoutchouteuses seront exposées ultérieurement.

Le pneumatique comporte un clou, comportant une tête 70, destinée à ancrer le clou 30 dans la bande de roulement, la tête 70 ayant une dimension maximale DT, et une mise 60, destinée à entrer en contact avec la glace. Un corps 80 relie la tête 70 et la mise 60. Le corps 80 a un axe de symétrie de rotation. L'« axe longitudinal » 100 du clou 30 coïncide avec cet axe de symétrie. L'ensemble formé par la tête 70 et le corps 80 du clou a une hauteur radiale HA (ici, 9.5 mm).

Le clou 30 est disposé dans la bande de roulement 20 de sorte que son axe longitudinal 100 est sensiblement parallèle à une direction radiale et que la mise 60 du clou 30 fait saillie de la bande de roulement 20 lorsque le clou n'est pas en contact avec le sol (comme c'est la cas à la figure 6). Le corps 80 du clou est au moins partiellement en contact avec la première partie 201 de la bande de roulement 20 ; par contre, la tête 70 du clou 30 est entièrement ancrée dans la deuxième partie 202 de la bande de roulement 20. La deuxième partie 202 de la bande de roulement 20 enveloppe donc la tête 70 du clou et s'étend radialement à l'intérieur de la tête du clou, jusqu'à une distance DI du point radialement le plus à l'intérieur du clou, la distance DI étant supérieure ou égale à 40% de la dimension maximale DT de la tête du clou (DI $\geq$ DT/2). En l'occurrence, DI = 4.2 mm et DT = 9 mm ; DI est donc égale à 47% de la dimension maximale DT. La deuxième partie 202 de la bande de roulement 20 s'étend radialement à l'extérieur de la tête 70 du clou 30, jusqu'à une distance DE du point radialement le plus à l'intérieur du clou 30, la distance DE étant supérieure ou égale à 40% de ladite hauteur radiale HA. En l'occurrence, DE = 6.5 mm et DE/HA = 68%. Enfin, la deuxième partie 202 de la bande de roulement 20 s'étend dans toutes les directions perpendiculaires à l'axe longitudinal 100 du clou, jusqu'à une distance DP de l'axe longitudinal du clou, la distance DP étant supérieure ou égale à la dimension maximale DT de la tête du clou. Dans le cas représenté à la figure 6, DT = 9 mm et DP = 9 mm. Idéalement, DP est plus grand et correspond au double de DT.

Revenons à la première composition caoutchouteuse (formant la première partie 201 de la bande de roulement 20) et à la deuxième composition caoutchouteuse (formant la deuxième partie 202 de la bande de roulement 20).

L'idée à la base de l'invention est de tirer parti de la répartition inhomogène des températures dans une bande de roulement d'un pneumatique clouté roulant sur de la glace. En effet, les compositions caoutchouteuses utilisés dans les pneumatiques se distinguent par leur faible conduction thermique (typiquement de l'ordre de 0.3 W/(m·K)). Celle-ci est bien plus faible que celle des matériaux dans lesquels sont réalisés les clous, comme par exemple l'acier doux (46 W/(m·K)), Al-SiC (175 W/(m·K)) ou l'aluminium (237 W/(m·K)). Lorsqu'un clou est en contact avec de la glace, il prend rapidement la température de la glace et un transfert thermique s'établit entre la composition caoutchouteuse entourant le clou (et en particulier sa tête, où les surfaces d'échanges sont importantes). La composition caoutchouteuse entourant la tête du clou, c'est-à-dire la deuxième partie 202 de la bande de roulement 20, se trouve donc à une température inférieure à celle de la plus grande partie de la bande de roulement (et notamment la première partie 201 de la bande de roulement 20). En revanche, l'adhérence sur la glace est entièrement déterminée par la première partie 201 de la bande de roulement 20 qui est en contact direct avec la glace. En choisissant de manière astucieuse les compositions caoutchouteuses formant la première partie 201 et la deuxième partie 202 de la bande de roulement 20, on peut obtenir un pneumatique qui a une excellente adhérence sur glace et dont le comportement mécanique change selon la température du sol sur lequel il roule. Si l'on choisit une deuxième composition caoutchouteuse (celle qui forme la deuxième partie 202 de la bande de roulement 20) qui est rigide à basse température et plus molle à haute température, on obtient que le clou aura tendance à rester en saillie de la bande de roulement lorsque le sol est froid (roulage sur glace) et à s'incliner, en déformant la composition caoutchouteuse qui l'entoure lorsque le sol est plus chaud (roulage sur asphalte non couvert de glace). La demanderesse a découvert que cet effet est optimisé lorsque le module complexe G*(0°C) de la première composition caoutchouteuse est inférieur à 1.5 MPa et le module complexe G* de la deuxième composition caoutchouteuse évolue en fonction de la température tel que G*(5°C) est supérieur ou égal à 5 MPa et G*(20°C) est inférieur ou égal à 0.5· G*(5°C).

Le Tableau I donne, à titre d'exemple, la recette pour une première et une deuxième composition caoutchouteuse permettant d'obtenir de telles performances. La recette est donnée en pce (« pour cent élastomère »), c'est-à-dire en parties en poids pour 100 parties en poids d'élastomère. Les modules complexes correspondants sont également indiqués.

Tableau I

| Parts en pce | Première composition caoutchouteuse | Deuxième composition caoutchouteuse |
| --- | --- | --- |
| SBR (1) | 30 | - |
| BR (2) | 17 | 52 |
| NR (3) | 53 | 10 |

(suite)

| Parts en pce | Première composition caoutchouteuse | Deuxième composition caoutchouteuse |
|---|---|---|
| SBR (4) | - | 38 |
| Silice (5) | 60 | 90 |
| Silane (6) | 4.6 | 7.1 |
| Noir de carbone (7) | 4 | 4 |
| Plastifiant liquide (8) | 40 | 13 |
| Plastifiant solide (9) | - | 20 |
| Acide stéarique | 1.7 | 1.85 |
| Cire anti-ozone | 1.3 | 1.5 |
| Antioxydant (10) | 2.2 | 2 |
| DPG (11) | 1.8 | 2.1 |
| ZnO | 1.3 | 0.7 |
| Soufre soluble | 1.9 | 1.6 |
| CBS (12) | 2 | 1.45 |
| G*(0°C) | 0.9 | 9 |
| G*(5°C) | 0.87 | 5.2 |
| G*(20°C) | 0.82 | 2.23 |

Annotations au Tableau I :

(1) SBR solution avec 16% de motifs styrène et 24% de motifs 1,2 de la partie butadiénique (Tg -65°C) ;

(2) Polybutadiène avec 4% de motif 1,2 et 93% de 1,4-cis (Tg = -106°C);

(3) Caoutchouc naturel ;

(4) SBR solution avec 44% de motif styrène et 41% de motif 1,2 de la partie butadiénique (Tg -12°C) porteur d'une fonction silanol en extrémité de la chaîne élastomère (Tg -12°C) ;

(5) Silice « Zeosil 1165 MP » de la société Rhodia (type « HDS » hautement dispersible) ;

(6) Agent de couplage silane TESPT (« SI69 » de la société Evonik) ;

(7) Grade ASTM N234 (société Cabot) ;

(8) Huile MES (« Catenex SNR » de la société Shell)

(9) Résine C5/C9 (« Escorez ECR-373 » de la société Exxon Mobil) ;

(10) N-(1,3-diméthylbutyl)-N'-phényl-p-phénylènediamine, de la société Flexsys ;

(11) Diphénylguanidine (« Perkacit » DPG de la société Flexsys) ;

(12) N-dicylohexyl-2-benzothiazol-sulfénamide (« Santocure CBS » de la société Flexsys).

Le mélange caoutchouteux est préférentiellement à base d'au moins un élastomère diénique, une charge renforçante et un système de réticulation.

Par élastomère (ou indistinctement caoutchouc) « diénique », on entend de manière connue un élastomère issu au moins en partie (i.e., un homopolymère ou un copolymère) de monomères diènes c'est-à-dire de monomères porteurs de deux doubles liaisons carbone-carbone, conjuguées ou non. L'élastomère diénique utilisé est préférentiellement choisi dans le groupe constitué par les polybutadiènes (BR), le caoutchouc naturel (NR), les polyisoprènes de synthèse (IR), les copolymères de butadiène-styrène (SBR), les copolymères d'isoprène-butadiène (BIR), les copolymères d'isoprène styrène (SIR), les copolymères de butadiène-styrène-isoprène (SBIR) et les mélanges de ces élastomères.

Un mode de réalisation préférentiel consiste à utiliser un élastomère « isoprénique », c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon d'autres modes de réalisation préférentiels, l'élastomère diénique peut être constitué, en tout ou partie, d'un autre élastomère diénique tel que, par exemple, un élastomère SBR (E-SBR ou S-SBR) utilisé en coupage ou non avec un autre élastomère, par exemple du type BR.

La composition de caoutchouc peut comporter également tout ou partie des additifs habituellement utilisés dans les matrices de caoutchouc destinées à la fabrication de pneumatiques, tels que par exemple des charges renforçantes comme le noir de carbone ou des charges inorganiques comme la silice, des agents de couplage pour charge inorganique, des agents anti-vieillissement, des antioxydants, des agents plastifiants ou des huiles d'extension, que ces derniers soient de nature aromatique ou non aromatique (notamment des huiles très faiblement ou non aromatiques, par exemple du type naphténiques ou paraffiniques, à haute ou de préférence à basse viscosité, des huiles MES ou TDAE, des résines plastifiantes à haute Tg supérieure à 30°C), des agents facilitant la mise en oeuvre (processabilité) des compositions à l'état cru, des résines tackifiantes, un système de réticulation à base soit de soufre, soit de donneurs de soufre et/ou de peroxyde, des accélérateurs, des activateurs ou retardateurs de vulcanisation, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment sels de cobalt ou de nickel.

Les compositions sont fabriquées dans des mélangeurs appropriés, en utilisant deux phases de préparation successives bien connues de l'homme du métier : une première phase de travail ou malaxage thermomécanique (phase dite « non productive ») à haute température, jusqu'à une température maximale comprise entre 110°C et 190°C, de préférence entre 130°C et 180°C, suivie d'une seconde phase de travail mécanique (phase dite « productive ») jusqu'à une plus basse température, typiquement inférieure à 110°C, phase de finition au cours de laquelle est incorporé le système de réticulation.

A titre d'exemple, la phase non productive est conduite en une seule étape thermomécanique de quelques minutes (par exemple entre 2 et 10 min) au cours de laquelle on introduit, dans un mélangeur approprié tel qu'un mélangeur interne usuel, tous les constituants de base nécessaires et autres additifs, à l'exception du système de réticulation ou vulcanisation. Après refroidissement du mélange ainsi obtenu, on incorpore alors dans un mélangeur externe tel qu'un mélangeur à cylindres, maintenu à basse température (par exemple entre 30°C et 100°C), le système de vulcanisation. L'ensemble est alors mélangé (phase productive) pendant quelques minutes (par exemple entre 5 et 15 min).

La composition finale ainsi obtenue est ensuite calandrée, par exemple sous la forme d'une feuille ou plaque pour caractérisation, ou encore extrudée, pour former la bande extérieure utilisée dans un pneumatique selon l'invention.

La vulcanisation (ou cuisson) peut ensuite être conduite de manière connue à une température généralement comprise entre 130°C et 200°C, de préférence sous pression, pendant un temps suffisant qui peut varier par exemple entre 5 et 90 min en fonction notamment de la température de cuisson, du système de vulcanisation adopté et de la cinétique de vulcanisation de la composition considérée.

Le mode de réalisation représenté à la figure 6 correspond au cas où la tête de chaque clou est entièrement ancrée dans une deuxième partie distincte de la bande de roulement. Ce mode de réalisation permet de réduire la quantité de la deuxième composition caoutchouteuse, ce qui peut être avantageux si cette composition caoutchouteuse est onéreuse ou si d'autres considérations rendent souhaitable de prévoir d'autres compositions caoutchouteuses dans la profondeur de la bande de roulement.

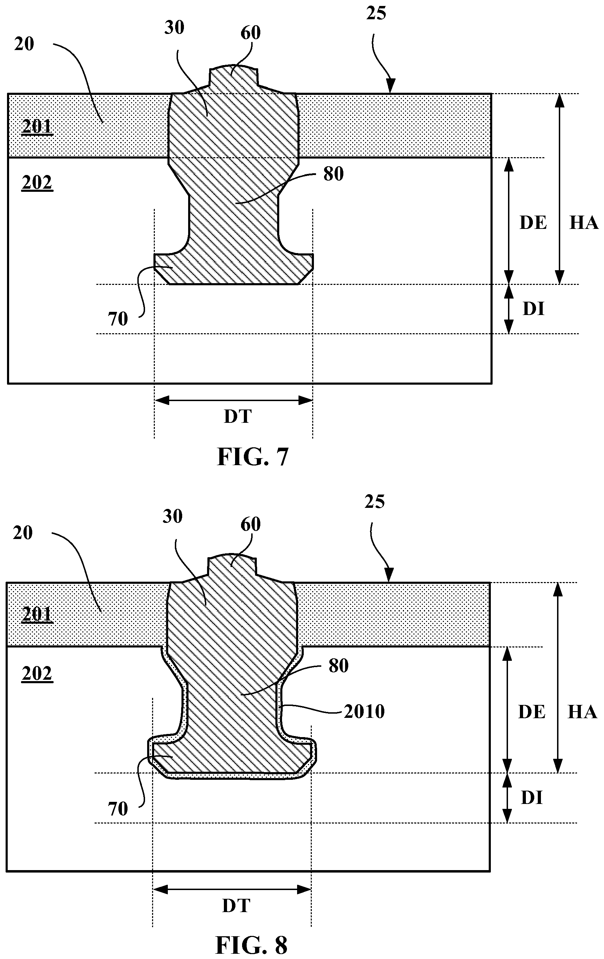

Il existe cependant d'autres modes de réalisation intéressants. Il est notamment possible de prévoir que la bande de roulement 20 comporte une seule deuxième partie 202 formée dans la deuxième composition caoutchouteuse, les têtes 70 de tous les clous 30 étant ancrées dans cette deuxième partie 202. Ce mode de réalisation, représenté de manière schématique à la figure 7, est avantageux dans la mesure où il réduit la complexité du procédé de fabrication. En effet, il est possible d'appliquer la deuxième partie 202 par simple pose sur l'armature de sommet du pneumatique.

Signalons qu'une pellicule 2010 formée de la première composition caoutchouteuse peut être disposée entre le clou 30 et la deuxième partie 202 de la bande de roulement, comme cela est représenté, de manière schématique, à la figure 8. Il ne s'agit pas d'une configuration proprement souhaitée mais qui peut être induite par le moulage des alvéoles dans la bande de roulement, lorsque les éléments prévus pour mouler l'alvéole pénètrent dans la bande de roulement crue et provoquent le fluage d'une petite partie de la première composition caoutchouteuse vers la partie inférieure de l'alvéole. Ce fluage, qui peut donc conduire à la formation d'une fine pellicule formée de la première composition caoutchouteuse entre le clou et la deuxième partie de la bande de roulement, est sans conséquence significative sur les performances d'un pneumatique selon l'invention, pourvu que l'épaisseur de la pellicule, mesurée perpendiculairement à la surface du clou, est inférieure ou égale à 1 mm.

La demanderesse a conduit des essais comparatifs sur glace et sur asphalte, avec des pneumatiques de dimension 205/55 R16 montés sur un véhicule Audi A4. Un pneumatique du type représenté à la figure 7 (avec les compositions caoutchouteuses du Tableau I) a été comparé à un pneumatique équivalent dont la seule différence consistait en ce que la deuxième partie 202 de la bande de roulement 20 a été réalisée dans la même composition que la première partie 201 de la bande de roulement, c'est-à-dire avec la première composition caoutchouteuse du Tableau I.

Tableau II

|  | Adhérence glace | Usure route |
|---|---|---|
| Pneumatique de référence | 100 | 100 |
| Pneumatique selon l'invention | 115 | 100 |

On constate que le pneumatique selon l'invention possède une meilleure adhérence sur glace sans pour autant dégrader l'usure de la route.

## Revendications

1. Pneumatique (10) destiné à rouler sur un sol pouvant être couvert de glace, comportant:

une bande de roulement (20) comportant une première partie (201) en contact avec le sol et au moins une deuxième partie (202) disposée radialement à l'intérieur de la première partie, la première partie (201) de la bande de roulement (20) étant formée dans une première composition caoutchouteuse et la deuxième partie (202) de la bande de roulement (20) étant formée dans une deuxième composition caoutchouteuse différente de la première composition caoutchouteuse ;
au moins un clou (30), comportant :

une tête (70), destinée à ancrer le clou dans la bande de roulement (20), la tête (70) ayant une dimension maximale DT ;
une mise (60), destinée à entrer en contact avec la glace ;
un corps (80) reliant la tête (70) et la mise (60), le corps (80) ayant un axe de symétrie, l'ensemble formé par la tête (70) et le corps (80) du clou (30) ayant une hauteur radiale HA ;
un axe longitudinal (100) passant par l'axe de symétrie du corps (80) ;

ledit au moins un clou (30) étant disposé dans la bande de roulement (20) de sorte que :

son axe longitudinal (100) est sensiblement parallèle à une direction radiale ;
la mise (60) du clou (30) faisant saillie de la bande de roulement (20) lorsque le clou (30) n'est pas en contact avec le sol ;
le corps (80) du clou (30) étant au moins partiellement en contact avec la première partie (201) de la bande de roulement (20) ; et
la tête (70) du clou (30) étant entièrement ancrée dans la deuxième partie (202) de la bande de roulement (20) ;

ladite au moins une deuxième partie (202) de la bande de roulement (20) enveloppe la tête (70) dudit au moins un clou (30) et s'étend :

radialement à l'intérieur de la tête (70) du clou (30), jusqu'à une distance DI du point radialement le plus à l'intérieur du clou (30), la distance DI étant supérieure ou égale à 40% de la dimension maximale DT de la tête (70) du clou (30) (DI ≥ 0.4·DT/2) ;

dans toutes les directions perpendiculaires à l'axe longitudinal (100) du clou, jusqu'à une distance DP de l'axe longitudinal (100) du clou (30), la distance DP étant supérieure ou égale à la dimension maximale DT de la tête (70) du clou (30) ; **caractérisé en ce que**

ladite au moins une deuxième partie (202) de la bande de roulement (20) s'étendant :

radialement à l'extérieur de la tête (70) du clou (30), jusqu'à une distance DE du point radialement le plus à l'intérieur du clou (30), la distance DE étant supérieure ou égale à 40% de ladite hauteur radiale HA ; **en ce qu'**une pellicule (2010) formée de la première composition caoutchouteuse peut être disposée entre ledit au moins un clou (30) et ladite au moins une deuxième partie (202) de la bande de roulement (20), l'épaisseur de la pellicule (2010), mesurée perpendiculairement à la surface du clou (30), étant inférieure ou égale à 1 mm ; **en ce que** le module complexe G*(0°C) de la première composition caoutchouteuse est inférieur à 1.5 MPa ; **et en ce que** le module complexe G* de la deuxième composition caoutchouteuse évolue en fonction de la température tel que G*(5°C) est supérieur ou égal à 5 MPa et G*(20°C) est inférieur ou égal à 0.5· G*(5°C).

2. Pneumatique selon la revendication 1, dans lequel le pneumatique (10) comporte une pluralité de clous (30), dans lequel la bande de roulement (20) comporte une pluralité de deuxièmes parties (202) formées dans la deuxième composition caoutchouteuse, et dans lequel la tête (70) de chaque clou (30) est entièrement ancrée dans une deuxième partie (202) distincte de la bande de roulement (20).

3. Pneumatique selon la revendication 1, dans lequel le pneumatique (10) comporte une pluralité de clous (30), dans lequel la bande de roulement (20) comporte une seule deuxième partie (202) formée dans la deuxième composition caoutchouteuse, et dans lequel les têtes (70) de tous les clous (30) sont ancrées dans cette deuxième partie (202).

4. Pneumatique selon l'une quelconque des revendications précédentes, dans lequel la hauteur radiale HA est supérieure ou égale à 9 mm et inférieure ou égale à 10 mm.

5. Pneumatique selon l'une quelconque des revendications précédentes, dans lequel la distance DE est supérieure ou égale à 60% de ladite hauteur radiale HA.

6. Pneumatique selon l'une quelconque des revendications précédentes, dans lequel la dimension maximale DT de la tête (70) du clou (30) est supérieure ou égale à 8 mm et inférieure ou égale à 10 mm.

7. Pneumatique selon l'une quelconque des revendications précédentes, dans lequel la distance DI est supérieure ou égale à 4 mm et inférieure ou égale à 4.5 mm.

8. Pneumatique selon l'une quelconque des revendications précédentes, dans lequel la distance DP est supérieure ou égale à 1.5·DT et inférieure ou égale à 2.5·DT (1.5·DT ≤ DP ≤ 2.5·DT).

9. Pneumatique selon la revendication 8, dans lequel la distance DP est égale au double de la dimension maximale DT de la tête (70) du clou (30) (DP = 2·DT).

10. Pneumatique selon l'une quelconque des revendications précédentes, dans lequel ledit au moins un clou (30) est réalisé en aluminium ou en cuivre.

## Patentansprüche

1. Zum Rollen auf einem gegebenenfalls vereisten Boden ausgebildeter Reifen (10), umfassend:

eine Lauffläche (20) umfassend einen ersten Teil (201) in Kontakt mit dem Boden und wenigstens einen radial innerhalb des ersten Teils angeordneten zweiten Teil (202), wobei der erste Teil (201) der Lauffläche (20) aus einer ersten Gummimischung besteht und der zweite Teil (202) der Lauffläche (20) aus einer zweiten Gummimischung verschieden von der ersten Gummimischung besteht; wenigstens einen Spike (30), umfassend:

einen zum Verankern des Spikes in der Lauffläche (20) ausgebildeten Kopf (70), wobei der Kopf (70) ein Höchstmaß DT aufweist;
einen zum Berühren des Eises ausgebildeten Dorn (60);
einen den Kopf (70) und den Dorn (60) verbindenden Körper (80), wobei der Körper (80) eine Symmetrieachse aufweist, wobei die aus dem Kopf (70) und dem Körper (80) des Spikes (30) gebildete Gesamtheit eine radiale Höhe HA aufweist;
eine durch die Symmetrieachse des Körpers (80) verlaufende Längsachse (100);

wobei der wenigstens eine Spike (30) in der Lauffläche (20) so angeordnet ist, dass:

seine Längsachse (100) im Wesentlichen parallel zu einer radialen Richtung ist;
der Dorn (60) des Spikes (30) über die Lauffläche (20) übersteht, wenn der Spike (30) nicht den Boden berührt;
der Körper (80) des Spikes (30) wenigstens teilweise den ersten Teil (201) der Lauffläche (20) berührt; und
der Kopf (70) des Spikes (30) vollständig im zweiten Teil (202) der Lauffläche (20) verankert ist;

der wenigstens eine zweite Teil (202) der Lauffläche (20) den Kopf (70) des wenigstens einen Spikes (30) umgibt und sich erstreckt:

radial innerhalb des Kopfs (70) des Spikes (30) bis zu einer Distanz DI vom Punkt, der sich radial am weitesten innen im Spike (30) befindet, wobei die Distanz DI größer gleich 40 % des Höchstmaßes DT des Kopfs (70) des Spikes (30) ist (DI $\geq$ 0,4·DT/2);
in allen Richtungen senkrecht zur Längsachse (100) des Spikes bis zu einer Distanz DP der Längsachse (100) des Spikes (30), wobei die Distanz DP größer gleich dem Höchstmaß DT des Kopfs (70) des Spikes (30) ist;
**dadurch gekennzeichnet, dass** der wenigstens eine zweite Teil (202) der Lauffläche (20) sich erstreckt: radial außerhalb des Kopfs (70) des Spikes (30) bis zu einer Distanz DE vom Punkt, der sich radial am weitesten innen im Spike (30) befindet, wobei die Distanz DE größer gleich 40 % der radialen Höhe HA ist;
dass ein aus der ersten Gummimischung gebildeter Film (2010) zwischen dem wenigstens einen Spike (30) und dem wenigstens einen zweiten Teil (202) der Lauffläche (20) angeordnet sein kann, wobei die Stärke des Films (2010), gemessen senkrecht zur Oberfläche des Spikes (30), kleiner gleich 1 mm ist;
dass der komplexe Modul G*(0 °C) der ersten Gummimischung kleiner als 1,5 MPa ist;
und dass sich der komplexe Modul G* der zweiten Gummimischung entsprechend der Temperatur entwickelt, so dass G*(5 °C) größer gleich 5 MPa ist und G*(20 °C) kleiner gleich 0,5 G*(5 °C) ist.

2. Reifen nach Anspruch 1, wobei der Reifen (10) eine Vielzahl von Spikes (30) umfasst, wobei die Lauffläche (20) eine Vielzahl von aus der zweiten Gummimischung gebildeten zweiten Teilen (202) umfasst, und wobei der Kopf (70) von jedem Spike (30) vollständig in einem zweiten Teil (202) verschieden von der Lauffläche (20) verankert ist.

3. Reifen nach Anspruch 1, wobei der Reifen (10) eine Vielzahl von Spikes (30) umfasst, wobei die Lauffläche (20) einen einzigen aus der zweiten Gummimischung gebildeten zweiten Teil (202) umfasst, und wobei die Köpfe (70) aller Spikes (30) in diesem zweiten Teil (202) verankert sind.

4. Reifen nach einem der vorhergehenden Ansprüche, wobei die radiale Höhe HA größer gleich 9 mm und kleiner gleich 10 mm ist.

5. Reifen nach einem der vorhergehenden Ansprüche, wobei die Distanz DE größer gleich 60 % der radialen Höhe HA ist.

6. Reifen nach einem der vorhergehenden Ansprüche, wobei das Höchstmaß DT des Kopfs (70) des Spikes (30) größer gleich 8 mm und kleiner gleich 10 mm ist.

7. Reifen nach einem der vorhergehenden Ansprüche, wobei die Distanz DI größer gleich 4 mm und kleiner gleich 4,5 mm ist.

8. Reifen nach einem der vorhergehenden Ansprüche, wobei die Distanz DP größer gleich 1,5·DT und kleiner gleich 2,5·DT ist (1,5·DT $\leq$ DP $\leq$ 2,5·DT).

9. Reifen nach Anspruch 8, wobei die Distanz DP gleich dem Doppelten des Höchstmaßes DT des Kopfs (70) des Spikes (30) ist (DP = 2·DT).

10. Reifen nach einem der vorhergehenden Ansprüche, wobei der wenigstens eine Spike (30) aus Aluminium oder Kupfer besteht.

**Claims**

1. Tyre (10) intended to run along ground which may be covered with ice, comprising:

   - a tread (20) comprising a first part (201) in contact with the ground and at least one second part (202) placed radially to the inside of the first part, the first part (201) of the tread (20) being formed from a first rubber composition and the second part (202) of the tread (20) being formed from a second rubber composition different from the first rubber composition; and
   - at least one stud (30) comprising:

     • a head (70) intended to anchor the stud in the tread (20), the head (70) having a maximum dimension DT;
     • a protuberance (60) intended to come into contact with the ice;
     • a body (80) joining the head (70) and the protuberance (60), the body (80) having an axis of symmetry, the assembly formed by the head (70) and the body (80) of the stud (30) having a radial height HA; and
     • a longitudinal axis (100) passing through the axis of symmetry of the body (80),

   - said at least one stud (30) is placed in the tread (20) so that:

     • its longitudinal axis (100) being approximately parallel to a radial direction;
     • the protuberance (60) of the stud (30) protruding from the tread (20) when the stud (30) is not in contact with the ground;
     • the body (80) of the stud (30) being at least partially in contact with the first part (201) of the tread (20); and
     • the head (70) of the stud (30) being entirely anchored in the second part (202) of the tread (20),

   - said at least one second part (202) of the tread (20) surrounds the head (70) of said at least one stud (30) and extends:

     • radially to the inside of the head (70) of the stud (30) over a distance DI from the radially innermost point of the stud (30), the distance DI being equal to or greater than 40% of the maximum dimension DT of the head (70) of the stud (30) (DI ≥ 0.4DT/2);
     • in all directions perpendicular to the longitudinal axis (100) of the stud over a distance DP from the longitudinal axis (100) of the stud (30), the distance DP being equal to or greater than the maximum dimension DT of the head (70) of the stud (30),

   - in which said at least one second part (202) of the tread (20) extends radially to the outside of the head (70) of the stud (30) over a distance DE from the radially innermost point of the stud (30), the distance DE being equal to or greater than 40% of said radial height HA;
   - in which a skin (2010) formed from the first rubber composition may be placed between said at least one stud (30) and said at least one second part (202) of the tread (20), the thickness of the skin (2010), measured perpendicularly to the surface of the stud (30), being less than or equal to 1 mm;
   - in which the complex modulus G*(0°C) of the first rubber composition is less than 1.5 MPa; and
   - in which the complex modulus G* of the second rubber composition varies with temperature such that G*(5°C) is equal to or greater than 5 MPa and G*(20°C) is less than or equal to 0.5G*(5°C).

2. Tyre according to Claim 1, which tyre (10) comprises a plurality of studs (30), in which tyre the tread (20) comprises a plurality of second parts (202) formed from the second rubber composition and in which the head (70) of each stud (30) is entirely anchored in a second, separate part (202) of the tread (20).

3. Tyre according to Claim 1, which tyre (10) comprises a plurality of studs (30), in which tyre the tread (20) comprises a single second part (202) formed from the second rubber composition, and in which the heads (70) of all the studs (30) are anchored of the tread (20).

4. Tyre according to any one of the preceding claims, in which the radial height HA is equal to or greater than 9 mm but less than or equal to 10 mm.

5. Tyre according to any one of the preceding claims, in which the distance DE is equal to or greater than 60% of said radial height HA.

6. Tyre according to any one of the preceding claims, in which the maximum dimension DT of the head (70) of the stud (30) is equal to or greater than 8 mm but less than or equal to 10 mm.

7. Tyre according to any one of the preceding claims, in which the distance DI is equal to or greater than 4 mm but less than or equal to 4.5 mm.

8. Tyre according to any one of the preceding claims, in which the distance DP is equal to or greater than 1.5DT but less than or equal to 2.5DT ($1.5DT \leq DP \leq 2.5DT$).

9. Tyre according to Claim 8, in which the distance DP is equal to twice the maximum distance DT of the head (70) of the stud (30) (DP = 2DT).

10. Tyre according to any one of the preceding claims, in which said at least one stud (30) is made of aluminium or copper.

**FIG. 1**
**ART ANTERIEUR**

**FIG. 2**
**ART ANTERIEUR**

**FIG. 3**
**ART ANTERIEUR**

**FIG. 4**
**ART ANTERIEUR**

**FIG. 5**

**FIG. 6**

EP 2 780 179 B1

**FIG. 7**

**FIG. 8**

**EP 2 780 179 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 63297109 A
- JP 58051134 B
- EP 1055509 A
- DE 102010015939